(19) Europäisches Patentamt
European Patent Office
Office européen des brevets

(11) **EP 3 039 382 B1**

(12) **EUROPÄISCHE PATENTSCHRIFT**

(45) Veröffentlichungstag und Bekanntmachung des Hinweises auf die Patenterteilung:
**07.06.2017 Patentblatt 2017/23**

(21) Anmeldenummer: **14750304.9**

(22) Anmeldetag: **04.07.2014**

(51) Int Cl.:
***G01D 5/24*** *(2006.01)*

(86) Internationale Anmeldenummer:
**PCT/DE2014/200303**

(87) Internationale Veröffentlichungsnummer:
**WO 2015/028003 (05.03.2015 Gazette 2015/09)**

(54) **KAPAZITIVER SENSOR MIT INTEGRIERTEM HEIZELEMENT**

CAPACITIVE SENSOR WITH INTEGRATED HEATING ELEMENT

CAPTEUR CAPACITIF AVEC ÉLÉMENT DE CHAUFFAGE INTÉGRÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2013 DE 102013217170**
**07.01.2014 DE 102014200060**

(43) Veröffentlichungstag der Anmeldung:
**06.07.2016 Patentblatt 2016/27**

(73) Patentinhaber: **Micro-Epsilon Messtechnik GmbH & Co. KG**
**94496 Ortenburg (DE)**

(72) Erfinder:
• **REINDL, Norbert**
**94081 Fürstenzell (DE)**
• **WAGNER, Manfred**
**84371 Triftern (DE)**

(74) Vertreter: **Patent- und Rechtsanwälte Ullrich & Naumann**
**PartG mbB**
**Schneidmuehlstrasse 21**
**69115 Heidelberg (DE)**

(56) Entgegenhaltungen:
**DE-A1- 19 601 078        DE-C1- 19 724 168**
**US-A1- 2007 068 266**

EP 3 039 382 B1

## Beschreibung

Die vorliegende Erfindung betrifft ein Sensorelement eines kapazitiven Sensors, bestehend aus zwei oder mehreren Lagen eines Substrates, zwischen denen oder in denen die Elektroden des Sensors eingebracht sind. Des Weiteren betrifft die Erfindung einen Sensor mit einem entsprechenden Sensorelement.

Kapazitive Sensoren werden meist mit oberflächlichen Elektroden ausgeführt. Speziell für raue Umgebungen ist es mittlerweile Stand der Technik, die Elektroden z.B. hinter Glas zu setzen oder mit geeigneten nichtmetallischen Schutzkappen, z.B. aus Kunststoff oder Keramik, zu versehen. Eine besonders günstige Art des Sensoraufbaus ist aus DE 10 2009 060002 bekannt, wo die Elektrode eines kapazitiven Abstandssensors in ein mehrere keramische Lagen umfassendes Sensorelement integriert ist.

Kapazitive Abstands- oder Positionssensoren arbeiten nach dem Prinzip des Plattenkondensators, dessen Kapazität wie folgt ausgewertet wird:

$$C = \varepsilon_0 \cdot \varepsilon_r \cdot \frac{A}{d}$$

Neben der Fläche $A$ der Elektrode wird die Messgröße Abstand $d$ ausgewertet. Die Dielektrizitätskonstante $\varepsilon_r$ des Mediums geht als Parameter in den Messwert mit ein.

Daraus wird mit einer geeigneten Elektronik ein Abstands- oder Positionssignal erzeugt. Da bei einem Plattenkondensator die Kapazität nicht nur von der Position des Messobjektes abhängt, sondern auch von den dielektrischen Eigenschaften des Mediums im Messspalt, sind derartige Sensoren empfindlich auf Änderungen des Mediums, sofern sich dessen dielektrischen Eigenschaften ändern. Besonders kritisch ist dabei die Anwesenheit von Wasser, da Wasser aufgrund seiner sehr hohen Dielektrizitätskonstante $\varepsilon_r=81$ einen großen Einfluss auf die Kapazität und somit auf das Messsignal hat.

Kapazitive Sensoren gibt es in verschiedensten Ausführungen, beispielsweise mit einfacher Messelektrode, mit zusätzlichen Schirmelektroden (Guard-Prinzip) und mit außen liegenden Masseelektroden.

Soll mit einem kapazitiven Sensor in sehr feuchter Umgebung oder z.B. direkt auf eine Wasseroberfläche gemessen werden, so ist mit Betauung zu rechnen. Die Betauung hat einen nichtlinearen Effekt, der von sehr vielen unterschiedlichen Parametern abhängt, z.B. Sauberkeit der Oberfläche, Temperaturwechsel, Oberflächenaktivität, etc. Durch die Betauung mit Wasser ändert sich daher das Messsignal. Da kapazitive Sensoren aufgrund ihrer prinzipbedingten hohen Auflösung häufig bei Messaufgaben eingesetzt werden, wo höchste Genauigkeit erforderlich ist, wird das Messsignal durch Betauung stark gestört.

Eine Schutzkappe oder Abdeckung bringt hier keine Abhilfe, da es unerheblich ist, wo sich im Messspalt das störende Medium befindet. Sobald sich das Medium zwischen den Elektroden befindet, ändert es die Kapazität und damit den Messwert. Durch diesen bekannten Einfluss werden kapazitive Sensoren regelmäßig in Umgebungen eingesetzt, wo Feuchtigkeit nicht auftritt. Gerade bei sehr hochauflösenden Messungen kann jedoch schon eine geringste Betauung stören. Dies kann z.B. bei industriellen Anwendungen in Gegenden der Fall sein, wo durch die klimatischen Bedingungen eine hohe Luftfeuchtigkeit herrscht.

Eine besondere Anwendung ist der Einsatz von kapazitiven Sensoren für die Niveaumessung gegen eine Wasseroberfläche mit einer Wasserwaage, auch hydrostatische Niveaumessung genannt. Derartige Wasserwaagen werden in größeren Anlagen eingesetzt, wo eine sehr hohe Ebenheit, genauer gesagt eine exakte Ausrichtung nach lokaler Schwerkraft, erforderlich ist, wie zum Beispiel bei großen Beschleunigeranlagen.

Aus der US 5,090,128 A ist - für sich gesehen - eine derartige Vorrichtung mit einer hydrostatischen Niveaumessung bekannt.

Ein System kommunizierender Röhren verbindet über die Anlage verteilte Messtanks miteinander. Darin befindet sich Wasser, dessen Oberfläche durch die Röhren eine weitverzweigte Wasserwaage darstellt, womit die waagrechte Ausrichtung der Anlage überprüft wird.

Darin ist ein kapazitiver Wegsensor auf einem Halter oberhalb der Wasseroberfläche montiert. Der Sensor ist mit einer Schutzschicht beschichtet. Auf dessen Rückseite ist ein Leistungstransistor als Heizung montiert, damit Betauung verhindert wird. Diese bekannte Lösung ist jedoch aufwändig in der Konstruktion und Herstellung, da viele Komponenten zusammenzufügen sind. Vor allem bedeutet die nachträgliche Aufbringung von Elementen eine hohe Fehleranfälligkeit, vor allem in Bezug auf die Dichtigkeit gegenüber dem Eindringen von Wasser in das oder die Messelement(e). Durch das rückseitige Anbringen des Heiztransistors kann es auch aufgrund eines nicht homogenen Wärmeeintrages zu Aufwölbungen der Oberfläche des Sensors aufgrund der thermischen Ausdehnung der verwendeten Materialien kommen. Dadurch ändert sich der Abstand zur Oberfläche und damit der Messwert. Eine Aufwölbung ist bei kapazitiven Sensoren besonders nachteilig, da dadurch der Messwert nicht unerheblich verfälscht wird.

Bei der hydrostatischen Niveaumessung geht es darum, in einem geschlossenen System gegen eine Wasseroberfläche zu messen. Diese Messung muss bei einem Messbereich von mehreren Millimetern noch eine Auflösung von unter $0,1\,\mu m$ bieten und eine hohe Langzeitstabilität gewährleisten. Die permanente Messung gegenüber Wasser führt unweigerlich zu einer Betauung des gegenüberliegenden Sensors. Üblicherweise wird eine Betauung als gleitender Offset herauskalibriert. Diese Art der Kompensation ist allerdings aufgrund der geforderten Stabilität nicht zielführend.

Das Betauungsproblem kann durch ein zusätzliches Heizelement umgangen werden. Dadurch wird der Sensor gegenüber seiner Umgebung auf etwas höherer Temperatur gehalten, was eine Betauung verhindert.

Die Dokumente DE19724168 C1 und US 2007/0068266 A1 zeigen kapazitive Sensoren mit integrierten Heizelementen.

Die Erfahrung zeigt, dass trotz einer Heizung die Sensoren mit blanker Oberfläche (Elektroden offen liegend) nicht langzeitstabil arbeiten. Dies kann an trotz Heizung eindringender Feuchtigkeit bei starken Temperaturänderungen oder Wasserspritzern bzw. Hochschwappen von Wasser bei Befüllvorgängen liegen. Die eingedrungene Feuchtigkeit führt zu einem Sensordrift. Je nach Heizleistung kann dieser Drift teilweise wieder eliminiert werden. Es könnten aber auch Verunreinigung zu Niederohmigkeit führen und die Funktionalität des Sensors nachhaltig beeinträchtigen. Daher werden im Stand der Technik zusätzliche Schutzelemente vor den Elektroden angebracht. Wird ein Sicherheitsabstand (z. B. Luftspalt) zwischen einem beheizten Sensor und einer Schutzschicht planerisch berücksichtigt, reduziert sich der nutzbare Messbereich. Liegt die Schutzschicht direkt auf dem Sensor, besteht die Gefahr, dass ein Wärmeübergang auf diese Schicht stattfindet und sich die Funktionalität des Sensors verändert.

Der vorliegenden Erfindung liegt nun die Aufgabe zugrunde, ein kapazitiv arbeitendes Sensorelement und einen Sensor mit einem entsprechenden Sensorelement zur hochauflösenden stabilen Messung über lange Zeit hinweg anzugeben. Ein solcher Sensor soll sich insbesondere zum Einsatz bei der hydrostatischen Niveaumessung eignen.

Voranstehende Aufgabe ist mit den Merkmalen der nebengeordneten Patentansprüche 1 und 10 gelöst. Danach ist das gattungsbildende Sensorelement dadurch gekennzeichnet, dass in dem Sensorelement mindestens ein Heizelement integriert ist und die Elektroden und das mindestens eine Heizelement in einem hermetisch dichten Körper versintert sind. Der erfindungsgemäße Sensor umfasst ein solches Sensorelement. Erfindungsgemäß ist wesentlich, dass das Heizelement innerhalb des Sensorelements angeordnet ist. In vorteilhafter Weise ist das Heizelement mittig im Sensorelement angeordnet.

Die im Stand der Technik störende Betauung von Oberflächen hängt vom Taupunkt bzw. von der Taupunkttemperatur ab. Betauung wird verhindert, wenn die betreffende Oberfläche auf einer geringfügig höheren Temperatur gehalten wird als die umgebende feuchte Luft. Eine Taupunktunterschreitung wird somit vermieden. Das Betauungsproblem wird durch ein (ohmsches) Heizelement im Sensor gelöst. Dadurch wird der Sensor gegenüber seiner Umgebung auf etwas höherer Temperatur gehalten, wodurch eine Betauung sicher vermieden wird.

Erfindungsgemäß wird das Heizelement in einem einzigen Fertigungsprozess direkt in das Sensorelement eingebracht.

Sowohl die Elektroden (Messelektrode, ggf. Guard-Elektrode und/oder Masseelektrode) als auch die Heizung werden in einem kompakten, mehrschichtigen Sensorelement integriert, das mit einer zusätzlichen hermetisch dichten Abdeckschicht versehen sein kann. Die einzelnen Lagen werden in einem gemeinsamen Prozess verpresst und gesintert, wodurch sich eine absolute Dichtigkeit ergibt.

Die Heizung besteht aus Leiterbahnen aus einem geeigneten Material, die mit Strom durchflossen sind. Aufgrund des ohmschen Widerstandes der Leiterbahnen wird elektrische Energie in Wärme umgewandelt, die zur Heizung des Sensorelementes dient. Die Heizung wird mittig in das mehrschichtige Element eingebracht, wodurch eine Verformung des Messelements durch ungleichmäßigen Wärmeeintrag nahezu ausgeschlossen ist. Die Abdeckschicht über den Elektroden ist durch die Versinterung fest mit dem Sensor verbunden. Durch entsprechende Integration kann die Heizleistung gering gehalten werden. Da im allgemeinen Keramik eine gute Wärmeleitfähigkeit aufweist, ist die Wärmeverteilung homogen. Die Heizwicklungen können als Leiterbahnen über die ganze Fläche und in einer oder in mehreren Ebenen ausgebildet sein. Auch kann die Leiterbahn als singuläre Heizfläche ausgebildet sein.

Der Aufbau des Sensors lässt sich mit verschiedenen Materialien umsetzen, z. B. Standard-Leiterplattenmaterial wie z.B. FR4. Ein besonders günstiger Aufbau wird durch keramische Lagen beispielsweise in LTCC- oder HTCC-Bauweise erreicht. Ein aus Keramik oder Glaskeramik gesinterter Sensor ist chemisch beständig.

Die einzelnen Schichten sind so ausgelegt, dass es keine gegenseitige Beeinflussung gibt. So ist die Heizwicklung beispielsweise bifilar gestaltet, um das Auftreten von Magnetfeldern zu verhindern. Die kapazitiven Elektroden kann man durch eine leitfähige Abschirmschicht, die auf einem definierten Potential gehalten wird, zusätzlich abschirmen.

Die Heizung kann mit Wechselstrom oder mit Gleichstrom gespeist werden. Die Verwendung von Wechselstrom erfordert einen geringfügig höheren Schaltungsaufwand und kann das kapazitive Messsignal beeinflussen. Bei der Verwendung von Gleichstrom kann dagegen Elektromigration auftreten. Die Auswahl der konkreten Stromversorgung hängt jeweils vom Anwendungsfall ab. Im vorliegenden Fall, d.h. bei der hydrostatischen Niveaumessung, wird an die Heizwindungen Gleichstrom angelegt, was den kapazitiven Sensor auch ohne Zwischenschirmung nicht beeinträchtigt.

Durch die direkte Auflage einer Schutzschicht auf den integrierten Elektroden geht sehr wenig an Messbereich verloren. Beim LTCC-Prozess können z.B. Keramikfolien mit nur 25 $\mu$m Dicke verwendet werden, wodurch die Abdeckschicht sehr dünn gehalten werden kann.

Je nach Umgebungsbedingungen lässt sich die Heizleistung regeln, beispielsweise mit geringerer Leistung, wenn es nur um Messungen bei erhöhter Luftfeuchtigkeit geht.

Da der Taupunkt von der Umgebungstemperatur abhängt, ist es günstig, bei wechselnden Umgebungstemperaturen die Heizleistung zu regeln bzw. anzupassen, damit immer gerade so viel Leistung benötigt wird, um die Betauung zu verhindern. Die Regelung könnte mittels Konstantstrom erfolgen. Um wechselnde Umgebungstemperaturen berücksichtigen zu können, ist ggf. eine Temperaturmessung erforderlich. Die Temperatur an der Oberfläche des Sensorelementes muss geringfügig höher sein als die Umgebungstemperatur. Über die Oberfläche des Sensorelementes wird über Strahlung und/oder Konvektion Wärme abgeführt, die von der Heizung im Sensorelement nachgeliefert werden muss. Es entsteht also ein Temperaturgradient im Sensorelement. Mit Hilfe dieses Temperaturgradienten kann die Außentemperatur bestimmt werden, indem an einer Stelle nahe der Oberfläche die Temperatur gemessen wird. Die Temperaturmessung kann in besonders vorteilhafter Weise über die kapazitive Elektrode des Sensors erfolgen. Indem neben dem Wechselstromsignal für eigentliche Positionsmessung ein Gleichstrom überlagert wird, kann der ohmsche Widerstand der Elektrode gemessen werden. Dieser ist temperaturabhängig und kann somit zur Temperaturmessung herangezogen werden.

Damit lässt sich eine Regelung der Heizleistung in besonders einfacher und kostengünstiger Weise realisieren. Aber auch andere bekannte Arten der Regelung sind denkbar, z.B. eine Konstantstromregelung.

Bei konstanten Umgebungsbedingungen, d.h. wenn die Umgebungstemperatur nicht oder nur in sehr geringem Maße schwankt, kann eine Regelung entfallen. Dann kann die Heizung mit einer experimentell bestimmten Heizleistung erfolgen. Diese hängt von den Umgebungs- und Einbaubedingungen des Sensors ab.

Die hier dargestellte Lösung ist einfach und arbeitet sicher, da alle Bauteile in einem hermetisch dichten Körper versintert und damit optimal gegen Feuchtigkeit geschützt sind.

Sowohl die Ansteuerung für die Heizung als auch die Auswertung der kapazitiven Messsignale können an verschiedenen Orten platziert werden. Vorteilhaft ist die Integration direkt im oberen Gehäuseteil des Messsystems. Die verwendete Technologie lässt es aber auch zu, die Elektronik teilweise oder vollständig direkt auf der Rückseite des Messelements vorzusehen. Bedingt durch die Wärme einer Auswerteelektronik kann die Heizleistung reduziert werden oder sogar entfallen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen

Fig. 1 in einer schematischen Ansicht, geschnitten, ein Ausführungsbeispiel eines kapazitiven Sensors in einer Wasserwaage zur hydrostatischen Niveaumessung und

Fig. 2 in einer schematischen Ansicht ein Ausführungsbeispiel des Sensorelements des Sensors aus Fig. 1, wobei das Sensorelement mit mehreren Lagen eines Substrats, mit integrierten Elektroden und mit einem integrierten Heizelement ausgestattet ist.

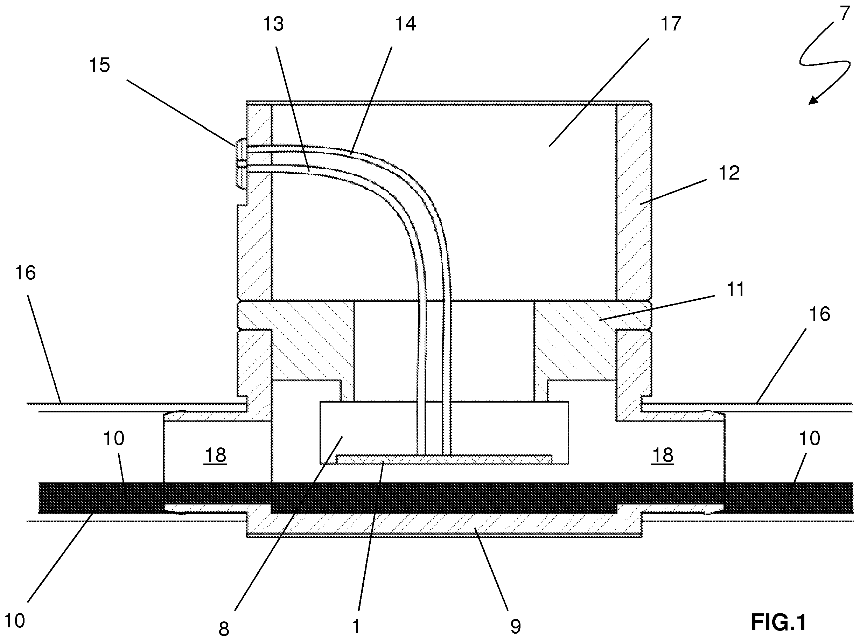

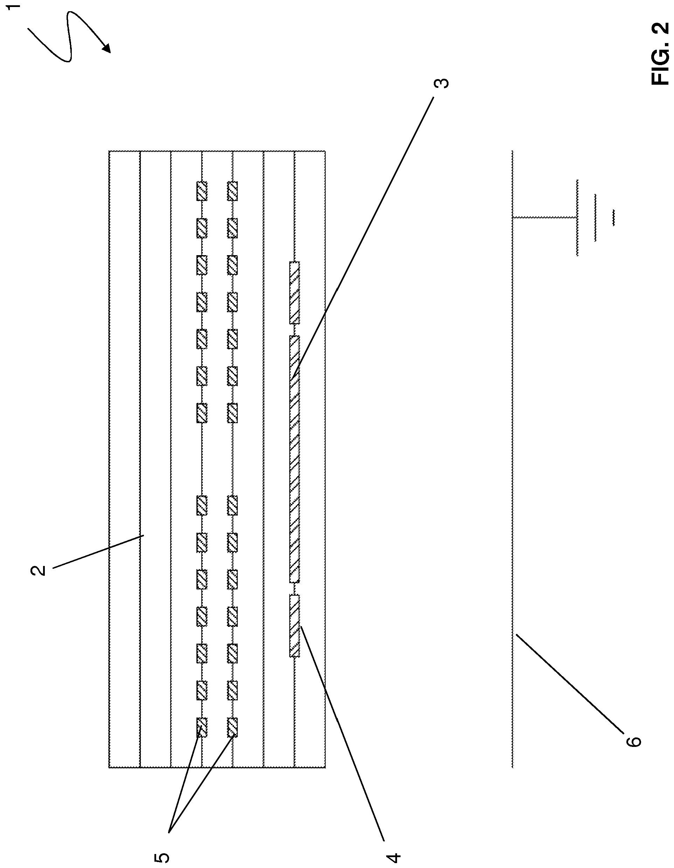

Figur 1 zeigt die Verwendung eines erfindungsgemäßen Sensorelements in einer Wasserwaage zur hydrostatischen Niveaumessung. Das verwendete Sensorelement 1 ist im Detail in Figur 2 gezeigt.

Die schematische Darstellung in Figur 1 zeigt die konkrete Anwendung des Sensorelements 1 bei der hydrostatischen Niveaumessung, wobei eine entsprechende Wasserwaage in Figur 1 mit Bezugszeichen 7 angedeutet ist.

Zu den wesentlichen Bestandteilen der Wasserwaage 7 gehört das Sensorelement 1, welches gegen das Niveau der Wasseroberfläche bzw. gegen den Wasserstand 10 misst.

Das Sensorelement 1 ist durch eine Sensorelement-Halterung 8 gehalten, die wiederum über eine Zwischenhalterung 11 mit einem Messsystem-Oberteil 12 verbunden ist. In der Wandung des Messsystem-Oberteil 12 ist ein Anschlussstecker 15 - außen - vorgesehen, wobei sich zwischen dem Sensorelement 1 und dem Anschlussstecker 15 eine Leitung 13 für die kapazitiven Sensorsignale und eine Leitung 14 für die Stromversorgung der Sensorheizung erstreckt.

Der innerhalb des Messsystem-Oberteils 12 vorgesehene Bauraum 17 kann zur Integration der erforderlichen Elektronik dienen.

In Figur 1 ist des Weiteren angedeutet, dass das Gehäuse im unteren Bereich beidseitige Anschlussstutzen 18 umfasst, an die ein Verbindungsrohr 16 bzw. ein Schlauch angeschlossen ist. Über das Verbindungsrohr 16 und die beiden Anschlussstutzen 18 erstreckt sich der Wasserstand 10 durch das Messsystem und kann das Sensorelement 1 gegen die Wasseroberfläche messen, wobei der Wasserstand 10 und somit die Oberfläche in Figur 1 durch eine schwarze Fläche dargestellt ist.

Figur 2 zeigt im Detail das Sensorelement 1, wie es bei dem in Figur 1 gezeigten Messsystem verwendet wird.

Entsprechend der allgemeinen Beschreibung umfasst das Sensorelement 1 eine integrierte Heizung.

Im Konkreten ist das Sensorelement 1 aus einem mehrlagigen Keramiksubstrat 2 aufgebaut, wobei die Elektroden 3 (Messelektroden) integriert sind. Zusätzlich ist eine Schirmelektrode 4 vorgesehen.

In etwa mittig sind die ausgeführte Leiterbahnen als Heizelement 5 vorgesehen. Von dort aus kann sich die Heizleistung gleichmäßig im Sensorelement 1 ausdehnen, ohne dass es auf der einen oder anderen Seite zu einer Wölbung kommt.

Figur 2 zeigt des Weiteren die Gegenelektrode 6 in schematischer Darstellung.

Für das in Figur 2 gezeigte Heizelement 5 ist wesentlich, dass eine integrierte Heizeinrichtung vorgesehen ist, die durch entsprechende Heizelemente 5 im Sinne einer Widerstandsheizung realisiert ist.

Hinsichtlich weiterer vorteilhafter Ausgestaltungen des erfindungsgemäßen Sensorelements und des erfindungsgemäßen Sensors wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel des erfindungsgemäßen Sensorelements und des erfindungsgemäße Sensors lediglich zur Erörterung der beanspruchten Lehre dient, diese jedoch nicht auf das Ausführungsbeispiel einschränkt.

**Bezugszeichenliste**

1 Sensorelement (mit integrierter Heizung)
2 Substrat, mehrlagiges Keramiksubstrat
3 Elektrode, Messelektrode
4 Schirmelektrode (Guard)
5 Heizelement (bifilar angeordnete Leiterbahnen)
6 Gegenelektrode
7 hydrostatische Niveaumessung
8 Sensorelement-Halterung
9 Boden des Messsystem
10 Wasserstand
11 Zwischenhalterung
12 Messsystem-Oberteil
13 Leitung für kapazitive Sensorsignale
14 Leitung Stromversorgung der Sensorheizung
15 Anschlussstecker (in der Wandung des Messsystem-Oberteils)
16 Verbindungsrohr zwischen den Messsystemen, Schlauch
17 Bauraum, nutzbar für integrierte Elektronik
18 Anschlussstutzen

**Patentansprüche**

**1.** Sensorelement (1) eines kapazitiven Sensors, bestehend aus zwei oder mehreren Lagen eines Substrates (2), zwischen denen die Elektroden (3) des Sensors eingebracht sind, wobei in dem Sensorelement (1) mindestens ein Heizelement (5) integriert ist,
**dadurch gekennzeichnet, dass** die Elektroden (3) und das mindestens eine Heizelement (5) in einem hermetisch dichten Körper versintert sind.

**2.** Sensorelement (1) nach Anspruch 1, **dadurch gekennzeichnet, dass** das mindestens eine Heizelement (5) vorzugsweise mittig innerhalb des Sensorelements (1) angeordnet ist.

**3.** Sensorelement (1) nach Anspruch 1 oder 2, **dadurch gekennzeichnet, dass** das Substrat (2) aus Keramik oder als Leiterplattenmaterial ausgeführt ist.

**4.** Sensorelement nach einem der Ansprüche 1 bis 3, **dadurch gekennzeichnet, dass** das mindestens eine Heizelement (5) als bifilar gewickelte Leiterbahn ausgeführt ist.

**5.** Sensorelement nach einem der Ansprüche 1 bis 4, **dadurch gekennzeichnet, dass** das mindestens eine Heizelement (5) als Heizfläche ausgeführt ist.

**6.** Sensorelement nach einem der Ansprüche 1 bis 5, **dadurch gekennzeichnet, dass** das mindestens eine Heizelement (5) durch eine Regelung regelbar ist.

**7.** Sensorelement nach Anspruch 6, **dadurch gekennzeichnet, dass** die Regelung mit Konstantstrom arbeitet.

**8.** Sensorelement nach Anspruch 5 oder 6, **dadurch gekennzeichnet, dass** die Regelung mit einem zusätzlichen Temperatursensor ausgestattet ist.

**9.** Sensorelement nach einem der Ansprüche 1 bis 8, **dadurch gekennzeichnet, dass** eine Elektrode (3) des Sensors als Temperatursensor mit Gleichstromspeisung ausgeführt ist.

**10.** Sensor mit einem kapazitiven Sensorelement (1) nach einem der Ansprüche 1 bis 9.

**11.** Sensorsystem oder Sensor mit einem kapazitiven Sensorelement nach einem der Ansprüche 1 bis 9 zur Anwendung in der hydrostatischen Niveaumessung (7), insbesondere als Bauteil einer Wasserwaage.

**Claims**

**1.** Sensor element (1) of a capacitive sensor, comprising two or more layers of a substrate (2), between which the electrodes (3) of the sensor are inserted, at least one heating element (5) being integrated into the sensor element (1), **characterised in that** the electrodes (3) and the at least one heating element (5) are fused together in a hermetically sealed body.

2. Sensor element (1) according to claim 1, **characterised in that** the at least one heating element (5) is preferably arranged centrally within the sensor element (1).

3. Sensor element (1) according to either claim 1 or claim 2, **characterised in that** the substrate (2) is made of ceramic or formed as printed circuit board material.

4. Sensor element according to any one of claims 1 to 3, **characterised in that** the at least one heating element (5) is designed as a bifilar coiled conductor track.

5. Sensor element according to any one of claims 1 to 4, **characterised in that** the at least one heating element (5) is designed as a heating surface.

6. Sensor element according to any one of claims 1 to 5, **characterised in that** the at least one heating element (5) can be controlled by means of a controller.

7. Sensor element according to claim 6, **characterised in that** the controller operates at a constant current.

8. Sensor element according to either claim 5 or claim 6, **characterised in that** the controller is equipped with an additional temperature sensor.

9. Sensor element according to any one of claims 1 to 8, **characterised in that** one electrode (3) of the sensor is designed as a temperature sensor supplied with a direct current.

10. Sensor comprising a capacitive sensor element (1) according to any one of claims 1 to 9.

11. Sensor system or sensor comprising a capacitive sensor element according to any one of claims 1 to 9 for use in hydrostatic level measurement (7), in particular as a component of a spirit level.

## Revendications

1. Elément de capteur (1) d'un capteur capacitif, composé de deux couches ou davantage d'un substrat (2) entre lesquelles les électrodes (3) du capteur sont mises en place, au moins un élément chauffant (5) étant intégré dans l'élément de capteur (1),

**caractérisé en ce que** les électrodes (3) et l'élément chauffant (5) au moins au nombre de un sont frittés dans un corps hermétiquement étanche.

2. Elément de capteur (1) selon la revendication 1, **caractérisé en ce que** l'élément chauffant (5) au moins au nombre de un est disposé de préférence de façon centrée à l'intérieur de l'élément de capteur (1).

3. Elément de capteur (1) selon la revendication 1 ou 2, **caractérisé en ce que** le substrat (2) est réalisé en céramique ou en tant que matériau de circuit imprimé.

4. Elément de capteur selon l'une des revendications 1 à 3, **caractérisé en ce que** l'élément chauffant (5) au moins au nombre de un est réalisé en tant que piste conductrice enroulée de façon bifilaire.

5. Elément de capteur selon l'une des revendications 1 à 4, **caractérisé en ce que** l'élément chauffant (5) au moins au nombre de un est réalisé en tant que surface chauffante.

6. Elément de capteur selon l'une des revendications 1 à 5, **caractérisé en ce que** l'élément chauffant (5) au moins au nombre de un peut être régulé par une régulation.

7. Elément de capteur selon la revendication 6, **caractérisé en ce que** la régulation fonctionne avec un courant constant.

8. Elément de capteur selon la revendication 5 ou 6, **caractérisé en ce que** la régulation est équipée d'un capteur de température supplémentaire.

9. Elément de capteur selon l'une des revendications 1 à 8, **caractérisé en ce qu'**une électrode (3) du capteur est réalisée en tant que capteur de température avec une alimentation en courant continu.

10. Capteur avec un élément de capteur capacitif (1) selon l'une des revendications 1 à 9.

11. Système de capteur ou capteur avec un élément de capteur capacitif selon l'une des revendications 1 à 9 destiné à être utilisé dans la mesure de niveau (7) hydrostatique, en particulier en tant que composant d'un niveau d'eau.

FIG.1

FIG. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009060002
- US 5090128 A
- DE 19724168 C1
- US 20070068266 A1